# EUROPEAN PATENT SPECIFICATION

(11) **EP 1 681 159 B1**
(45) Date of publication and mention of the grant of the patent: **03.06.2009**
(21) Application number: 06250010.3
(22) Date of filing: 04.01.2006
(51) Int. Cl.: B41F 17/00

(54) **Viscosity control and colorant circulation for printing lens molds**
Viskositäts- und Zirkulationssteuerung von Fabstoff für den Druck von Linsengussformen
Contrôle de viscosité et circulation de colorants pour imprimer des moules de lentilles

(30) Priority: 05.01.2005 US 29562
(43) Date of publication of application: 19.07.2006
(73) Proprietor: Johnson & Johnson Vision Care, Inc., Jacksonville, FL 32256 (US)
(72) Inventor: Widman, Michael F., Jacksonville, FL 32223 (US); Powell, Paul Mark, Jacksonville, FL 32258 (US); Fleming, Aidan, Tuam Galway (IE); Ryan, Joseph, Rhebouge Limerick (IE)
(74) Representative: Mercer, Christopher Paul

(56) References cited:
- EP-A- 1 433 604
- EP-A- 1 561 581
- EP-A1- 0 854 035
- DE-A1- 4 316 294
- DE-A1- 19 908 865
- US-A1- 2002 133 889
- US-A1- 2002 152 903
- US-B1- 6 453 927

## Description

### RELATED PATENT APPLICATIONS

This patent application claims priority of a provisional application, U.S. Ser. No. 60/536540 which was filed on January 14, 2004.

### FIELD OF THE INVENTION

The invention relates to devices for controlling the viscosity and circulation of colorants in systems for producing tinted contact lenses. The invention also relates to methods for controlling the viscosity and circulation of colorants in systems for producing tinted contact lenses.

### BACKGROUND OF THE INVENTION

The use of tinted contact lenses to alter the natural color of the iris is well known. Many colorants that are used to produce tinted lenses generally are composed of a binding polymer and pigments. In one method of manufacturing tinted contact lenses described and claimed in United States Application Serial No. 10/027,579 ("the '579 application"), now U.S. Patent App. Pub. No. 20030000028, published Jan. 2, 2003, the colorant is applied to uncured lens material by transfer of the colorant from a mold surface to the lens material and the latter is subsequently cured. The '579 application discloses that colorant transfer can be carried out using a printing pad containing a colorant composition that is pressed against a molding surface of an optical mold. The colorant composition, which typically includes a solvent component, is allowed to dry to provide tinted lens molds for manufacturing tinted contact lenses.

German patent application DE43 16294 discloses an ink container with an open bottom surrounded by a closed sidewall whose lower edge bears against the upper surface of a flat printing plate. An apertured baffle disk is disposed within the container just above its open bottom, and prevents the ink from being frictionally drawn to one side by the moving plate.

In the process of pad printing contact lens molds using closed cups, it is desirable to maintain colorant viscosity or solvent/solid ratio throughout the period of time that a given colorant is being employed. Typically, evaporation of solvent from the thin film left on the unetched portion of the cliché that is used in the pad printing process reduces the solvent to solids ratio in the colorant contained in the closed cup. A reduction in the solvent to solids ratio in the colorant typically increases colorant viscosity and ultimately leads to poor printing performance. Solvent is typically present in the colorant to aid in the transfer of the colorant from the cliché to the printing pad, and then from the print pad to the front curve lens mold. The colorant is designed to permit evaporation of a portion of the solvent to increase tackiness of the colorant on the print head to enable this transfer to the print pad. Type of solvent, type of colorant, temperature, humidity, air velocity, type of pad material, and type of print pattern are some of the factors that influence the desired level of solvent or viscosity needed for optimizing printing performance; additional factors include printer speed and cycle time. Because the ability of the colorant to fill the cliché etches is compromised when the height of the colorant in the cup goes below a critical level, it eventually becomes necessary to stop the printing process and replenish the cup with colorant. The changing out of cups and manual preparation of colorant with the correct solvent ratio is difficult and messy and exposes the technician to solvents. Accordingly, it is desirable to provide a colorant management system that circulates colorant from a reservoir to the cup, and from the cup and back to the reservoir while actively controlling the desired composition or viscosity of the colorant in the reservoir.

### SUMMARY OF THE INVENTION

The present invention provides systems including a colorant cup that is adjacent to a cliché in which colorant is transferred from a reservoir to the cup, and colorant is returned from the cup to the reservoir. Accordingly, in one aspect of the present invention there are provided systems including a colorant cup that is adjacent to a cliché, wherein the cup includes a vent, an interior roof portion, and an air gap beneath the roof portion; a reservoir including colorant; a feed conduit in fluid communication from said reservoir to said cup; and a return conduit in fluid communication from said cup to said reservoir.

In a related aspect, the present invention also provides colorant viscosity control and circulation systems having a cup situated adjacent to a cliché, a vent in the cup to provide an air gap above the colorant in the cup, a colorant reservoir capable of automatically maintaining the viscosity of the colorant, and associated pumps and conduits for circulating the colorant between the colorant reservoir and the cup while maintaining an essentially constant height of colorant in the cup. Accordingly, there are also provided colorant viscosity control and circulation systems including: a cup being sealably situated adjacent to a cliche, the cup including a vent to provide an air gap; a colorant reservoir including colorant, a solvent inlet valve, a viscometer immersed in the colorant, and a controller for adjusting the solvent inlet valve, the controller being responsive to a signal received from the viscometer; a feed conduit in fluid communication with the colorant reservoir; a feed pump for transferring colorant from the feed conduit into the cup; a return conduit in fluid communication with the cup; and a return pump for transferring colorant from the cup to the colorant reservoir.

The present invention also provides colorant cups useful in the systems of the present invention. Accordingly, there are provided colorant cups having a vent, an interior roof portion, a sealing edge, a feed orifice disposed about 1 to about 2 millimeters above the sealing edge, and a return orifice disposed about 3 to about 5 millimeters below the interior roof portion.

The present invention also provides methods in which colorants are transferred in the systems of the present invention from the reservoir to the colorant cup. Accordingly, there are also provide methods including providing a system, the system including a colorant cup that is adjacent to a cliché, wherein the cup includes a vent, an interior roof portion, and an air gap beneath the roof portion; a reservoir including colorant; a feed conduit in fluid communication from said reservoir to said cup; and a return conduit in fluid communication from said cup to said reservoir; and transferring colorant from the reservoir to the cup.

In a related aspect, the present invention also provides methods of circulating colorant in a pad printing system, including: providing a cup adjacent to a cliché, the cup containing colorant, and the cup containing air disposed above the colorant, wherein the air is capable of entering the cup through a vent situated in the cup; controlling the viscosity of the colorant in a colorant reservoir; transferring colorant from the colorant reservoir to the cup; and transferring colorant and air residing within the cup to the reservoir.

The present invention also provides methods of circulating colorants in a pad printing system that include different transfer rates of the colorant to and from the colorant cup. In this aspect of the invention, the different transfer rates helps to reduce colorant leaking onto the cliché. Accordingly, in another aspect of the present invention, there are provided methods that include providing a cup adjacent to a cliché, the cup containing colorant; controlling the viscosity of the colorant in a colorant reservoir; transferring colorant from the colorant reservoir to the cup; and transferring colorant residing within the cup to the reservoir at a faster pump rate compared to the rate that colorant from the colorant reservoir is pumped to the cup, wherein the cup comprises a rent, an interior roof portion and an air gap beneath said roof portion.

### BRIEF DESCRIPTION OF THE DRAWINGS

**FIG. 1** is an elevational schematic illustration of one embodiment of a colorant circulation system of the present invention.
**FIG. 2** is an elevational schematic illustration of the detail of the cup depicted in **FIG. 1**.
**FIG. 3** includes a schematic illustration, cross sectional illustration, and a perspective illustration of one embodiment of the colorant cup of the present invention.
**FIG. 4** is a schematic illustration of one embodiment of a colorant circulation system of the present invention.

### DETAILED DESCRIPTION OF ILLUSTRATIVE EMBODIMENTS

The systems of the present invention typically include a colorant cup having a vent, an interior roof portion, and an air gap beneath the roof portion, the colorant cup being disposed adjacent to a cliché. A reservoir including colorant is also provide in the systems of the present invention for providing a source of fresh, preferably viscosity-controlled, liquid colorant to the ink cup, which contacts a cliché. A feed conduit in fluid communication with the reservoir is provided to transfer fresh colorant from the reservoir to the ink cup. A return conduit in fluid communication with the cup is also provided to circulate the colorant in the ink cup back to the reservoir. As used herein, the terms "colorant cup" and "cup" are used herein to refer to an "ink cup" that is known in the pad printing arts. Suitable cups used in the present invention can be provided by any of a number of ink cups known to skilled artisans, such as closed ink cups, which will typically include certain modifications for providing the disclosed inventions. The cups of the present invention contain colorant, which is typically in a liquid form, contained adjacent to the surface of a cliché by the cup. Clichés are known in the pad printing art as surfaces containing etches that hold the liquid colorant, e.g., colorant in a particular etch pattern. The surface etches can have any pattern, but typically they will have a pattern like that of an iris to provide a natural look to tinted contact lenses. The cup is sealably held against and drawn across the cliché surface to deposit colorant within the surface etches. Print pads then contact the cliché to transfer the colorant pattern to the print pads. The pattern is subsequently transferred to the front curve lens mold for further processing of tinted contact lenses.

Suitable cups used in the present invention typically include a vent, an interior roof portion, and an air gap beneath the roof portion. The vent is provided as a small hole or channel that pierces the roof of the cup. The vent permits the surrounding gas external to the cup to enter to the interior of the cup to provide an air gap. Typically, the surrounding gas is air, although any number of other gases, such as an inert gas like nitrogen, can be used. Because the density of air is lower than the density of colorant, the air gap will generally be situated above the colorant and below the interior roof portion of the cup. The surrounding gas is capable of entering the cup through the vent as the colorant is drawn out of the cup. The vent, accordingly, provides that the pressure within the cup is substantially the same as the pressure of the surrounding gas.

Suitable cups typically include an inlet and an outlet for circulating the colorant into and out of the cup, respectively. A suitable inlet is typically provided in the cup as an orifice that is in fluid communication with both the feed conduit and with the colorant disposed on the cliché. This orifice typically remains submerged in the colorant that is disposed on the cliché during operation of the system. The orifice of the feed conduit is suitably disposed about 1 to about 2 millimeters above the cliché. In addition to enabling feeding of fresh colorant directly to the surface of the cliché, the proximity of the orifice to the cliché surface also enables the ready removal of most colorant from the cup during maintenance and shut down operations, e.g., by operation of a feed pump in the opposite direction to remove colorant from the cup. A suitable outlet in the cup is typically provided by an orifice that is in fluid communication with the return conduit and, optionally, that is in fluid communication with colorant that is disposed on the cliché. The cup typically includes a terminal portion of the return conduit that is disposed below the interior roof portion of the cup to allow for the air gap. Preferably, the terminal portion of the return conduit is disposed about 3 to about 5 millimeters below the interior roof portion of the cup. During operation of the system, the design of the cup and the position of the inlet and outlet orifices enable the cup to maintain a finite level of colorant with an overlying air gap, e.g., head space, at substantially atmospheric pressure. This design typically affords the recirculation of colorant in the ink cup at relatively low pressures that helps to prevent leakages.

Suitable reservoirs typically include a vessel that is capable of containing a volume of colorant that is larger than the volume of the colorant cup. Suitable reservoirs also include one or more stirrers, and associated stirring motors and optionally belts. Preferably the reservoirs include temperature control, e.g., heating and cooling coils. Suitable reservoirs useful in the systems of the present invention typically are capable of maintaining the viscosity of the colorant contained therein by the controlled addition of solvent into the colorant. In this regard, suitable reservoirs include a solvent inlet valve, a viscometer immersed in the colorant, and a controller for adjusting the solvent inlet valve. A separate reservoir or source of solvent is typically provided in fluid communication with the inlet valve. The inlet valve opening is typically controlled by a controller that is responsive to a signal received from the viscometer. Suitable controllable inlet valves are commercially available. Suitable viscometers typically include a spindle driven by a motor, such as provided by Brookfield Engineering Laboratories (Middleboro, Massachusetts). Other suitable viscometers may include a piston driven viscometer such as those produced by Cambridge Applied Systems (Medford, Massachusetts). Various suitable viscometers are commercially available in which the signals received from the viscometer are derived from the electric current that drives the motor of the viscometer. As used herein, the term "viscometer" refers to any device capable of providing a signal sensitive to changes in the viscosity of the fluid. Accordingly, suitable viscometers do not necessarily require output of an absolute value expressed in viscosity units, whereas a relative signal strength or torque value correlated to relative viscosity values is sufficient. These signals, in turn, are compared to an electric current set-point, which is correlated to a desired colorant viscosity for achieving constant speed of the spindle. When the controller determines that the electric current required to turn the spindle at a preselected rate is greater than the set point, the controller sends a signal to open the solvent inlet to allow solvent to enter the colorant in the reservoir to reduce the viscosity to the set point. When the controller determines that the viscosity is at or below the set point, then the controller closes the solvent inlet valve. This process is then repeated as the viscosity increases, e.g., due to solvent loss on the cliche, and decreases, e.g., due to solvent addition. Typically, the viscosity of the colorant is controlled at steady state to be in the range of from about 1000 to about 2300 centipoise, +/- about 200 centipoise.

Suitable feed conduits of the present invention typically provide fluid communication of colorant between the reservoir and cup. This fluid communication is provided, for example, by connecting one end of the feed conduit to the reservoir and the opposite end to the cup. The feed conduit can be connected to almost any part of the reservoir that is in contact with the colorant, for example at an opening in the wall of the reservoir or by utilization of a feed tube submerged in the colorant in the reservoir. Preferably, the feed conduit is connected to the bottom of the reservoir. Suitable feed conduits can be constructed of any material that is capable of transferring colorants. Because colorants used in the present invention contain organic solvents, and as such the materials of construction of the feed conduit should be compatible with organic solvents, such as glass, metal, plastic and rubber. Typically, the conduits used in the present invention are fashioned from plastic tubing, peristaltic pump tubing such as the Pharmed™ brand, and stainless steel for extension tube fittings extending into the cup. The feed conduits used in the present invention typically include at least one feed pump for transferring colorant from the feed conduit into the colorant cup. Any type of pump is suitable for the transferring colorant from the feed conduit into the cup, for example positive-displacement pumps as well as non-positive displacement pumps can be used. In certain embodiments of the present invention, it is desirable that the feed pump is capable of operating in a non-positive displacement mode. Suitable pumps include peristaltic pumps, impeller-type pumps, gear pumps, pumps having a back-flow feature, or any combination thereof. Preferably, a peristaltic pump and flexible peristaltic pump tubing such as the Pharmed™ brand (plasticized polypropylene) is used in the feed conduit.

Suitable return conduits are provided in fluid communication with the cup. The system of the present invention typically includes a return conduit that includes a return pump for transferring colorant from the cup to the reservoir. Any type of pump is suitable for the transferring colorant from the cup, for example positive-displacement pumps as well as non-positive displacement pumps can be used. In certain embodiments of the present invention, it is desirable that the return pump is capable of operating in a non-positive displacement mode. Suitable pumps include peristaltic pumps, impeller-type pumps, gear pumps, pumps having a back-flow feature, or any combination thereof. Preferably, a peristaltic pump and flexible peristaltic pump tubing such as the Pharmed™ brand (plasticized polypropylene) is used in the return conduit.

The systems of the present invention are typically designed so that the transfer rate in the return conduit is higher than the transfer rate in the feed conduit. In one embodiment, a higher transfer rate in the return conduit is provided by using similar diameter conduit and variable speed pumps. In a preferred embodiment, similar speed pumps are used and a higher transfer rate in the return conduit is provided using a return conduit in which a majority of the return conduit has a cross sectional area that is larger than that of a majority of the feed conduit. More preferably, similar speed pumps are used and a majority of the return conduit has a cross section area that is at least about twice as large as that of a majority of the feed conduit.

In a preferred embodiment of the present invention, there is provided a colorant viscosity control and circulation system having a colorant cup that is sealably situated adjacent to a cliché. In this embodiment, the cup includes a vent to provide an air gap so that colorant contained in the cup is kept substantially at atmospheric pressure. In this embodiment, a colorant reservoir is provided that includes colorant, a solvent inlet valve, a viscometer immersed in the colorant, and a controller for adjusting the solvent inlet valve. Here, the controller adjusts the opening of the solvent inlet valve in response to a signal received from the viscometer that indicates that the viscosity of the colorant has exceeded a set-point. The system of this embodiment also includes a feed tube in fluid communication with the colorant reservoir, a feed pump for pumping colorant from the feed tube into the cup, a return tube in fluid communication with the cup; and a return pump for pumping colorant from the cup to the colorant reservoir. Operation of this and related systems is carried out as provided herein below.

The methods in which colorants are transferred from the reservoir to the colorant cup in the present invention typically include providing a system as described herein and transferring colorant from the reservoir to the cup. Preferably, the methods of the present invention include providing a system that includes a colorant cup that is adjacent to a cliché, wherein the cup has a vent, an interior roof portion, and an air gap beneath the roof portion, a reservoir comprising colorant, a feed conduit in fluid communication with the reservoir; a return conduit in fluid communication with the cup; and transferring colorant from the reservoir to the cup.

Typically, the viscosity of the colorant is controlled by monitoring the viscosity of the colorant in the reservoir and adding solvent to the colorant while the viscosity is above a viscosity set point. The viscosity can be monitored using a variety of ways known in the rheological arts. For example, viscosity can be monitored in terms of the actual viscosity expressed in viscosity units, or the viscosity can be monitored based on a relative scale. Preferably, the viscosity is monitored on a relative scale as the torque required to turn a spindle submerged in the colorant. Various suitable viscometers, examples of which are indicated hereinabove, are commercially available and readily known to the skilled artisan.

In the methods described herein, colorant preferably is transferred from the cup to the reservoir. In another preferred embodiment, the colorant and air residing within the cup are transferred to the reservoir at a higher rate, preferably at least twice the rate, compared to the rate at which the colorant is transferred from the colorant reservoir to the cup. In the embodiment in which an air gap is provided in the colorant cup, the higher rate of colorant transfer in the return conduit gives rise to colorant and air being alternately transferred from the cup to the reservoir. In this regard, the height of the orifice of the return conduit within the cup gives rise to air entering the cup through the vent when the height of the colorant falls below the orifice of the return conduit. Accordingly, air is transferred into the return conduit until the level of the colorant in the cup reaches the orifice of the return conduit, at which point colorant is drawn into the return conduit. This process is repeated wherein colorant and air alternate at being transferred to the reservoir. Because air can be transported into the reservoir, it is desirable that the return conduit is attached to a portion of the reservoir that minimizes bubble formation in the colorant in the reservoir. A suitable place of attachment of the return conduit is above the colorant level in the reservoir, e.g., at the top of the reservoir, so that the returned air stays in the vapor phase of the reservoir and does not become transferred into the liquid phase of the reservoir.

In embodiments in which the material transfer rates throughout the system have reached a steady state condition, the colorant residing within the cup is maintained at an essentially constant level. An essentially constant colorant level is typically determined by the position above the cliché of a terminal portion of the return conduit, also referred to as the orifice of the return conduit. In embodiments where an air gap is provide beneath the inner roof portion of the cup, the terminal portion of the return conduit, e.g., the orifice, can be any height as long as it is higher than the terminal portion of the feed conduit within the cup. In preferred embodiments, the terminal portion of the return conduit is disposed about 3 to about 5 millimeters below the interior roof portion. The height of the colorant in the cup is typically in the range of from about one to about five centimeters.

During operation in certain embodiments of the present invention, the system typically includes a print pad that is positioned adjacent to the cup. In these embodiments, it is preferred to expose the cliché etches to fresh colorant from the inlet conduit on every stroke of the cliché. In this regard, colorant is preferably transferred into a first portion of the cup and out of a second portion of the cup, wherein the first portion is located closer to the print pad than the second portion.

In other embodiments of the present invention, it is also desirable that the colorant is transferred using pumping methods that minimize the formation of particles and contaminants in the colorant. In this regard, it is desirable that the colorant is transferred peristaltically to the cup, or to the reservoir, or to both, e.g., such as by use of one or more peristaltic pumps as described hereinabove.

In a preferred embodiment of the present invention, there is provided a method of circulating colorant in a pad printing system, including sealing a colorant cup adjacent to the cliché, the cup containing colorant, and the cup containing air disposed above the colorant, wherein the air is capable of entering the cup through a vent situated in the cup. This embodiment includes controlling the viscosity of the colorant in a colorant reservoir; pumping colorant from the colorant reservoir to the cup; and pumping colorant and air residing within the cup to the reservoir.

The present invention also provides methods of circulating colorants in a pad printing system that include different transfer rates of the colorant to and from the colorant cup. In this aspect of the invention, the different transfer rates help to reduce colorant leaking out of the cup and onto the cliché. Accordingly, in another aspect of the present invention, there are provided methods that include sealing a cup adjacent to a cliché, the cup containing colorant; controlling the viscosity of the colorant in a colorant reservoir; transferring colorant from the colorant reservoir to the cup. In these embodiments, the colorant residing within the cup is transferred to the reservoir using a faster effective transfer rate compared to the rate that colorant from the colorant reservoir is effectively transferred to the cup. In the methods disclosed herein, the colorant cup contains a vent, and optionally contains an air gap. As used herein, the term "effective transfer rate" refers to that rate at which colorant would be transferred in an unimpeded open system, e.g., where a vent is present in the cup and an excess of colorant is available to enter the return conduit. In not claimed systems lacking a vent, an air gap, or both, the transfer of the colorant in the return conduit is impeded by the slower rate of colorant provided to the cup by the feed conduit. In these not claimed systems, a negative pressure inside the cup typically results by action of the higher effective transfer rate in the return conduit compared to the feed conduit.
Accordingly, the methods disclosed herein would be capable of operating at slightly reduced pressures compared to ambient pressure, which typically occurs when the cup remains filled with colorant.

In certain embodiments of the present invention, the colorant is transferred from the colorant reservoir to the cup using a feed pump. Similarly, the colorant residing within the cup is transferred to the reservoir using a return pump. Although almost any type of pump can be used for transferring colorant residing within the cup to the reservoir, it is preferred to use a pump capable of operating in a non-positive displacement mode. Suitable examples of non-positive displacement mode pumps include, for example, a peristaltic pump, an impeller-type pump, a gear pump, a pump having a back-flow feature, or any combination thereof. Preferably, a peristaltic pump is used.

In certain preferred embodiments, it is desirable to also control the viscosity of the colorant to overcome colorant thickening arising from solvent loss. Thus, another embodiment of the present invention includes the method of circulating colorant in a pad printing system, which includes sealing a cup adjacent to a cliché, the cup containing colorant; controlling the viscosity of the colorant in a colorant reservoir; pumping colorant from the colorant reservoir to the cup; and pumping colorant residing within the cup to the reservoir at a faster pump rate compared to the rate that colorant from the colorant reservoir is pumped to the cup.

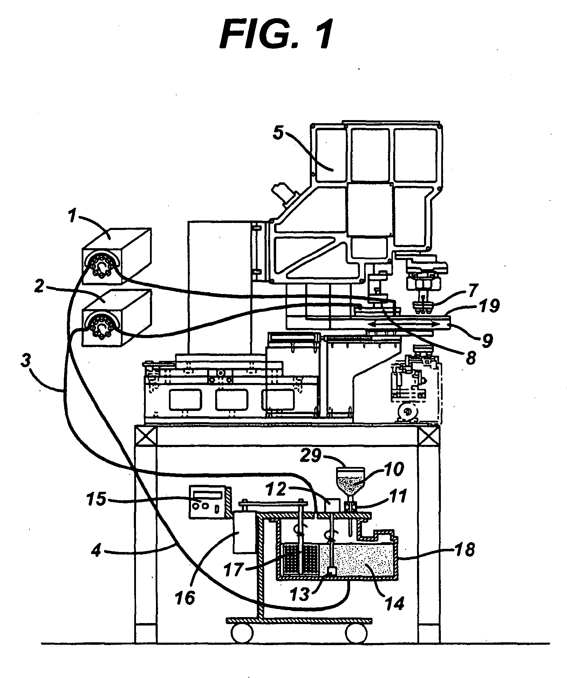

Further illustration of the systems, colorant cups and methods of the present invention is provided by reference to the embodiments depicted in the drawings. Referring to Figure **1****,** colorant **14** is added to reservoir **18** where it is continuously stirred by stirrer **17.** The stirrer is driven by motor 16 via a belt. Motor **12** drives a spindle **13** immersed in colorant **14** at a constant speed. The electrical current required to maintain the constant speed of motor **12** is monitored by controller **15.** The current drawn by motor **12** is directly related to the viscosity of colorant **14** although it is not a direct reading of viscosity. The controller **15** can be set such that for a given current setting (or relative setting) the solvent inlet valve **11** opens when the actual current reading (or relative reading) exceeds the set point value. Thus, when the viscosity of colorant **14** increase and the motor **12** current reading increases, solvent **29** from solvent reservoir **10** is added to colorant **14.** After sufficient solvent is added the current level from motor **12** drops below the set point and the solvent inlet valve **11** closes. Devices known as "Ink Pumps" that are commercially available from ITW Trans Tech America Inc. (Carol Stream, Illinois) can be incorporated in the systems of the present invention. Such devices are typically modified to be suitable in the present invention, for example, by eliminating the use of gear pumps residing within the reservoirs of such devices to minimize the generation of particle contaminants. Additional modifications include providing the surface of reservoir **18** in contact with the colorant to be composed of a material the minimizes the generation of particles, e.g., plated stainless steel.

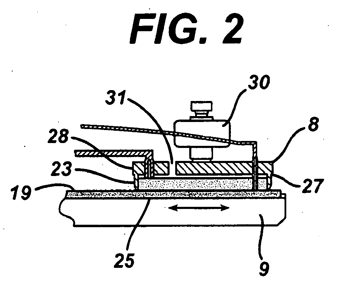

In **FIG. 1****,** colorant **14** is pulled from the bottom of reservoir **18** by colorant feed pump **1** via feed tubing **4.** The pump is a peristaltic pump with a fixed geometry holddown lever and constant speed motor. Also referring to Figure **2****,** the colorant is then fed into the ink cup **8** via extension feed tube **27,** also referred hereinabove as the orifice of the feed conduit. The outlet of the tube is about 1 to 2 millimeters from the surface of the cliché **19.** Colorant **25** fills the ink cup **8** until it reaches the inlet of extension return tube 28, also referred hereinabove as the orifice of the return conduit. The end of the extension return tube is about 3 to 5 millimeters from the roof of ink cup **8.** Colorant is contained in the ink cup **8** by a tight seal with the cliché **19** by ceramic doctor ring **23** *(i. e.,* sealing edge). The ink cup **8,** doctor ring **23,** and cliché are commercially available. When the colorant **25** reaches the extension return tube it is pulled via return tubing **3** by colorant return pump **2.** Both pumps **1, 2** are identical, however the colorant return tubing **3** is at least twice the diameter of the colorant feed tubing **4.** The difference in diameter and the use of identical peristaltic pumps (or pump heads) ensures that the flow rate on the return side outpaces the feed rate. Therefore, when the colorant **25** reaches the extension return tube **28** colorant is drawn until there no longer a fluid connection. When there is no longer a fluid connection air is drawn into the return tubing **3** via vent **31.** When operating in steady state the return tubing toggles from colorant draw to air draw. This allows for a constant colorant level in the cup which is preferred during the etch filling process.

Not wishing to be bound by a particular theory of operation, it is believed that freshly adjusted (solvent/viscosity) colorant is preferably deposited on the cliché etches on every stroke of the cliché. In this regard, it is desirable to feed fresh colorant via extension tube **27** at the front of the cup relative to the motion of the cliché holder **9** and to return the colorant at the relative back position via extension tube **28.** Referring to Figure **1****,** the colorant is picked up by the print pads **7** immediately after the cliché holder **19** has moved to the right. The relative locations of the inlet and outlet also encourage a non-stagnation of colorant in the cup. When it is desired to remove the ink cup for repair or a change of color, the cup is easily emptied by reversing feed pump **1** (or by reversing the direction of the tubing through the peristaltic rollers.) After reversing feed pump 1 to empty the ink cup, the remaining level of colorant is about 2 to 3 millimeters, which makes cleanup much easier than having a full cup of colorant.

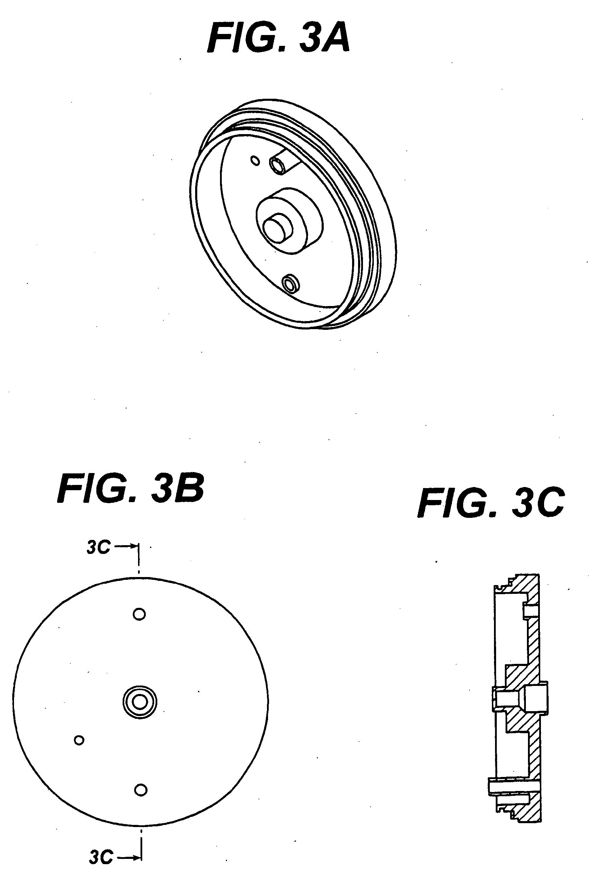

A preferred embodiment of the systems and methods of the present invention are illustrated hereinbelow. **FIG. 3** provides schematic, cross sectional, and perspective illustrations of one embodiment of the colorant cup of the present invention are provided. The schematic illustration depicts the placement of the through holes in the cup for placement of the vent, feed *(i.e.,* "flow") conduit orifice and return conduit orifice. The cross sectional illustration depicts the placement of the feed *(i.e.,* "flow") and return conduit orifices with respect to the inner roof portion of the cup and the cliché. The perspective illustration depicts the placement of the vent, feed (i.e., "flow") and return conduit orifices with respect to the inner roof portion of the cup.

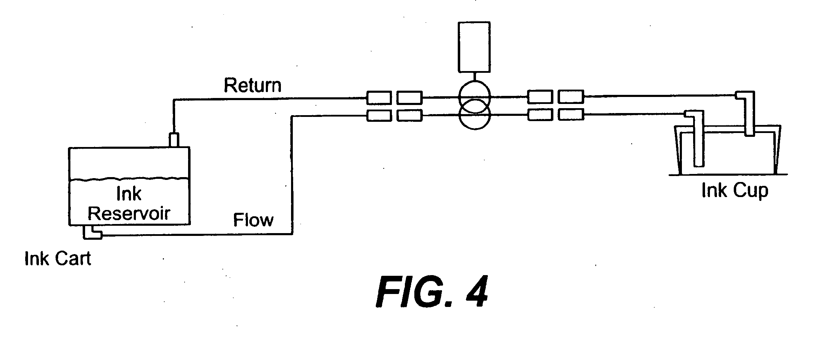

**FIG. 4** is a schematic illustration of a preferred embodiment of a colorant circulation system of the present invention. This figure illustrates a reservoir containing ink (i.e., colorant), the reservoir in fluid communication with feed ("flow") and return conduits. The feed conduit includes PTFE tubing connected by fittings to flexible tubing (Pharmed™), which is mounted on one head of a peristaltic pump. The flexible tubing is connected by additional fittings to additional PTFE tubing that is connected by fittings to an extension piece mounted in the cup that forms the orifice in fluid communication with the feed conduit. Similar tubing, connectors, and pump head provide the return conduit. Both peristaltic pump heads are connected to a common peristaltic pump. Further details of this embodiment are provided as follows:

| | | |
|---|---|---|
| Type of feed and return pump: | | Masterflex Peristaltic Pump, 30 RPM |
| Tubing Diameters: | | |
| | Flow and return hard tubing: | 1/4" ID PTFE Tubing |
| | Flow peristaltic tubing: | Masterflex Pharmed E-06485-17 Peristaltic Tubing |
| | Return peristaltic tubing: | Masterflex Pharmed E-06485-18 Peristaltic Tubing |
| Dimensions of Ink Cup: | | 165 mm diameter |
| Pump Speeds: | | Flow and return pumps rotate at 30 Hz |
| Colorant Viscosity Ranges: | | ca. 1000 to 2300 centipoise depending on colorant |
| Viscometer and controller: | | Supplier: Transtech, Model: Ink Pump (3.0L Bowl) |
| Colorant reservoir volume approx. 3000ml; | | |
| Solvent reservoir volume approx. 300ml | | |

## Claims

1. A printing-pad system comprising:
a colorant cup (8) that is adjacent to a cliché (19) and comprises an interior roof portion;
a reservoir (18) comprising colorant (14);
a feed conduit (4) in fluid communication from said reservoir to said cup; and
a return conduit (3) in fluid communication from said cup to said reservoir
**characterized in that** said cup comprises a vent (31), and a return orifice (28) disposed about 3 to about 5 millimeters below the interior roof portion, such that in use an air gap beneath said roof portion can be formed.

2. The system of claim 1 wherein said reservoir includes a solvent inlet valve (11), a viscometer immersed in said colorant, and a controller (15) for adjusting said solvent inlet valve, said controller being responsive to a signal received from said viscometer.

3. The system of claim 1 wherein said feed conduit includes a feed pump (1) for transferring colorant from said feed conduit into said cup.

4. The system of claim 3, wherein said feed pump is capable of operating in a non-positive displacement mode.

5. The system of claim 4, wherein said feed pump includes a peristaltic pump, an impeller-type pump, a gear pump, a pump having a back-flow feature, or any combination thereof.

6. The system of claim 5, wherein said feed pump is a peristaltic pump.

7. The system of claim 1 wherein said return conduit includes a return pump (2) for transferring colorant from said cup to said reservoir.

8. The system of claim 7, wherein said return pump is capable of operating in a non-positive displacement mode.

9. The system of claim 8, wherein said return pump includes a peristaltic pump, an impeller-type pump, a gear pump, a pump having a back-flow feature, or any combination thereof.

10. The system of claim 9, wherein said return pump is a peristaltic pump.

11. The system of claim 1, wherein said feed conduit includes a first pump head, and said return conduit includes a second pump head, wherein said first and second pump heads are actuated by a common pump.

12. The system of claim 1, wherein said cup includes an orifice (27) in fluid communication with said feed conduit and with colorant disposed on said cliché.

13. The system of claim 12, wherein said orifice disposed about 1 to about 2 millimeters above said cliché.

14. The system of claim 1, wherein the return orifice (28) is in fluid communication with said return conduit and with colorant disposed on said cliché.

15. The system of claim 14, wherein said cup includes a terminal portion of said return conduit disposed about 3 to about 5 millimeters below said interior roof portion.

16. The system of claim 1, wherein a majority of the return conduit has a cross sectional area that is larger than that of a majority of the feed conduit.

17. The system of claim 16, wherein a majority of the return conduit has a cross section area that is at least about twice as large as that of a majority of the feed conduit.

18. The system of claim 2 wherein said viscometer comprises a spindle (13) driven by a motor (12), and said signal being derived from the electric current that drives said motor.

19. A colorant cup comprising a sealing edge, an interior roof portion, a feed orifice (27); and a return orifice (28) **characterized in that** said cup comprises a vent (31), and the feed orifice (27) is disposed about 1 to about 2 millimeters above said sealing edge and the return orifice (28) is disposed about 3 to about 5 millimeters below said interior roof portion, such that in use an air gap beneath said roof portion can be formed.

20. A method of transferring colorant comprising:
providing a system comprising
a colorant cup (8) that is adjacent to a cliché (19) and comprises an interior roof portion;
a reservoir (18) comprising colorant (14);
a feed conduit (4) in fluid communication from said reservoir to said cup; and
a return conduit (3) in fluid communication from said cup to said reservoir; and
transferring colorant from said reservoir to said cup,
**characterized in that** said cup comprises a vent (31), and an air gap is formed beneath said roof portion.

21. The method of claim 20 further comprising transferring colorant from said cup to said reservoir.

22. The method of claim 20, wherein said viscosity of said colorant is controlled by monitoring the viscosity of said colorant and adding solvent (29) to said colorant while said viscosity is above a viscosity set point.

23. The method of claim 22, wherein said viscosity is monitored as the torque required to turn a spindle (13) submerged in said colorant.

24. The method of claim 20, wherein colorant and air residing within said cup are transferred to said reservoir at a higher rate compared to the rate at which the colorant is transferred from said colorant reservoir to said cup.

25. The method of claim 24, wherein colorant and air residing within the cup are transferred to said reservoir at least about twice the rate at which the colorant is transferred from said colorant reservoir to said cup.

26. The method of claim 20, wherein colorant and air are alternately transferred from said cup to said reservoir.

27. The method of claim 20, wherein air enters said cup through said vent.

28. The method of claim 20, wherein the colorant residing within said cup is maintained at an essentially constant level.

29. The method of claim 28, wherein said essentially constant level is determined by the position above said cliché of a terminal portion of said return conduit.

30. The method of claim 29, wherein said terminal portion of said return conduit is disposed about 3 to about 5 millimeters below said interior roof portion.

31. The method of claim 20, wherein the system includes a print pad (7) that is positioned adjacent said cup and colorant is transferred into a first portion of said cup and out of a second portion of said cup, said first portion being located closer to said print pad than said second portion.

32. The method of claim 20, wherein said colorant is transferred peristaltically to said cup, or to said reservoir, or to both.

33. A method of circulating colourant, comprising:
providing a colorant cup (8) adjacent to a cliché, said cup comprising an interior roof portion and containing colorant (14);
controlling the viscosity of said colorant in a colorant reservoir (18);
transferring colorant from said colorant reservoir to said cup; and
transferring colorant residing within said cup to said reservoir at a faster rate compared to the rate that colorant from said colorant reservoir is transferred to said cup,
**characterized in that** said cup comprises a vent (31), and an air gap beneath said roof portion.

34. The method of claim 33, wherein said cup remains filled with colorant.

35. The method of claim 33, wherein said transferring colorant from said colorant reservoir to said cup uses a feed pump (1) and said transferring colorant residing within said cup to said reservoir uses a return pump (2).

36. The method of claim 33, wherein said transferring colorant residing within said cup to said reservoir uses a pump capable of operating in a non-positive displacement mode.

37. The method of claim 36, wherein said pump capable of operating in a non-positive displacement mode includes a peristaltic pump, an impeller-type pump, a gear pump, a pump having a back-flow feature, or any combination thereof.

## Patentansprüche

1. Tampondrucksystem, das aufweist:
ein Farbnäpfchen (8), das sich benachbart einem Klischee (19) befindet und einen inneren Dachabschnitt aufweist;
einen Behälter (18), der einen Farbstoff (14) aufweist;
eine Speiseleitung (4) in fluidischer Verbindung von dem Behälter zu dem Näpfchen; und
eine Rückführleitung (3) in fluidischer Verbindung von dem Näpfchen zu dem Behälter;
**dadurch gekennzeichnet, dass** das Näpfchen eine Lüftungsöffnung (31) und eine Rückführöffnung (28) aufweist, die ungefähr 3 bis ungefähr 5 Millimeter unterhalb des inneren Dachabschnittes angeordnet ist, so dass bei der Verwendung ein Luftspalt unterhalb des Dachabschnittes gebildet werden kann.

2. System nach Anspruch 1, bei dem der Behälter ein Einlassventil (11) für Lösemittel, ein Viskosimeter, das in den Farbstoff eingetaucht ist, und einen Controller (15) zum Einstellen des Einlassventils für Lösemittel umfasst, wobei der Controller auf ein Signal anspricht, das von dem Viskosimeter empfangen wird.

3. System nach Anspruch 1, bei dem die Speiseleitung eine Speisepumpe (1) zum Überführen von Farbstoff aus der Speiseleitung in das Näpfchen umfasst.

4. System nach Anspruch 3, bei dem die Speisepumpe in der Lage ist, in einem Modus mit kraftschlüssiger Verlagerung zu arbeiten.

5. System nach Anspruch 4, bei dem die Zuführpumpe eine peristaltische Pumpe, eine Pumpe vom Impellertyp, ein Zahnradpumpe, eine Pumpe mit einer Rückstromeigenschaft oder irgendeine Kombination aus diesen umfasst.

6. System nach Anspruch 5, bei dem die Speisepumpe eine peristaltische Pumpe ist.

7. System nach Anspruch 1, bei dem die Rückführleitung eine Rückführpumpe (2) zum Überführen von Farbstoff aus dem Näpfchen in den Behälter umfasst.

8. System nach Anspruch 7, bei dem die Rückführpumpe in der Lage ist, in einem Modus mit kraftschlüssiger Verlagerung zu arbeiten.

9. System nach Anspruch 8, bei dem die Rückführpumpe eine peristaltische Pumpe, eine Pumpe vom Impellertyp, eine Zahnradpumpe, eine Pumpe mit einer Rückstromeigenschaft oder irgendeine Kombination aus diesen umfasst.

10. System nach Anspruch 9, bei dem die Rückführpumpe eine peristaltische Pumpe ist.

11. System nach Anspruch 1, bei dem die Speiseleitung einen ersten Pumpenkopf umfasst und die Rückführleitung einen zweiten Pumpenkopf umfasst, wobei der erste und der zweite Pumpenkopf von einer gemeinsamen Pumpe betätigt werden.

12. System nach Anspruch 1, bei dem das Näpfchen eine Öffnung (27) in fluidischer Verbindung mit der Speiseleitung und mit Farbstoff, der auf dem Klischee abgelegt ist, umfasst.

13. System nach Anspruch 12, bei dem die Öffnung ungefähr 1 bis ungefähr 2 Millimeter oberhalb des Klischees angeordnet ist.

14. System nach Anspruch 1, bei dem die Rückführöffnung (28) in fluidischer Verbindung mit der Rückführleitung und mit Farbstoff, der auf dem Klischee abgelegt ist, steht.

15. System nach Anspruch 14, bei dem das Näpfchen einen Endabschnitt der Rückführleitung umfasst, der ungefähr 3 bis ungefähr 5 Millimeter unterhalb des inneren Dachabschnittes angeordnet ist.

16. System nach Anspruch 1, bei dem ein Hauptanteil der Rückführleitung eine Querschnittsfläche hat, die größer als die eines Hauptanteils der Speiseleitung ist.

17. System nach Anspruch 16, bei dem ein Hauptteil der Rückführleitung eine Querschnittsfläche hat, die wenigstens etwa zweimal so groß ist wie die eines Hauptteils der Speiseleitung.

18. System nach Anspruch 2, bei dem das Viskosimeter eine Spindel (13) aufweist, die von einem Motor (12) betrieben wird, und bei dem das Signal von dem elektrischen Strom abgeleitet wird, welcher den Motor treibt.

19. Farbnäpfchen, mit einer Dichtkante, einem inneren Dachabschnitt, einer Speiseöffnung (27) und einer Rückführöffnung (28), **dadurch gekennzeichnet, dass** das Näpfchen eine Lüftungsöffnung (31) aufweist, und dass die Speiseöffnung (27) ungefähr 1 bis ungefähr 2 Millimeter oberhalb der Dichtkante angeordnet ist und die Rückführöffnung (28) ungefähr 3 bis ungefähr 5 Millimeter unterhalb des inneren Dachabschnittes angeordnet ist und ein Luftspalt unterhalb des Dachabschnittes gebildet werden kann.

20. Verfahren zum Überführen eines Farbstoffes, das aufweist:
Bereitstellen eines Systems mit
einem Farbnäpfchen (8), das sich benachbart einem Klischee (19) befindet und einen inneren Dachabschnitt aufweist;
einem Behälter (18), der Farbstoff (14) aufweist;
einer Speiseleitung (4) in fluidischer Verbindung von dem Behälter zu dem Näpfchen; und
einer Rückführleitung (3) in fluidischer Verbindung von dem Näpfchen zu dem Behälter; und
Überführen von Farbstoff aus dem Behälter in das Näpfchen,
**dadurch gekennzeichnet, dass** das Näpfchen eine Lüftungsöffnung (31) umfasst und ein Luftspalt unterhalb des Dachabschnittes gebildet wird.

21. Verfahren nach Anspruch 20, das weiter das Überführen von Farbstoff aus dem Näpfchen in den Behälter aufweist.

22. Verfahren nach Anspruch 20, bei dem die Viskosität des Farbstoffes durch Überwachen der Viskosität des Farbstoffes und Hinzufügen von Lösemittel (29) zu dem Farbstoff, wenn die Viskosität oberhalb eines Einstellpunktes für die Viskosität liegt, gesteuert wird.

23. Verfahren nach Anspruch 22, bei dem die Viskosität als das Drehmoment, das erforderlich ist, um eine Spindel (13) zu drehen, die in den Farbstoff eingetaucht ist, überwacht wird.

24. Verfahren nach Anspruch 20, bei dem Farbstoff und Luft, die sich innerhalb des Näpfchens befinden, mit einer höheren Geschwindigkeit in den Behälter überführt werden, im Vergleich zu der Geschwindigkeit, mit der der Farbstoff aus dem Behälter für Farbstoff in das Näpfchen überführt wird.

25. Verfahren nach Anspruch 24, bei dem Farbstoff und Luft, die sich innerhalb des Näpfchens befinden, mit wenigstens ungefähr der zweifachen Geschwindigkeit in den Behälter überführt werden, mit der der Farbstoff aus dem Behälter für Farbstoff in das Näpfchen überführt wird.

26. Verfahren nach Anspruch 20, bei dem Farbstoff und Luft abwechselnd von dem Näpfchen in den Behälter überführt werden.

27. Verfahren nach Anspruch 20, bei dem Luft durch die Lüftungsöffnung in das Näpfchen eintritt.

28. Verfahren nach Anspruch 20, bei dem der Farbstoff, der sich innerhalb des Näpfchens befindet, auf einem im Wesentlichen konstanten Pegel gehalten wird.

29. Verfahren nach Anspruch 28, bei dem der im Wesentlichen konstante Wert durch die Position eines Endabschnittes der Rückführleitung oberhalb des Klischees festgelegt wird.

30. Verfahren nach Anspruch 29, bei dem der Endabschnitt der Rückführleitung ungefähr 3 bis ungefähr 5 Millimeter unterhalb des inneren Dachabschnittes angeordnet ist.

31. Verfahren nach Anspruch 20, bei dem das System einen Drucktampon (7) umfasst, der angrenzend an das Näpfchen angeordnet ist, und bei dem Farbstoff in einen ersten Bereich des Näpfchens und aus einem zweiten Bereich des Näpfchens heraus überführt wird, wobei der erste Bereich sich näher an dem Drucktampon befindet als der zweite Bereich.

32. Verfahren nach Anspruch 20, bei dem der Farbstoff peristaltisch zu dem Näpfchen oder zu dem Behälter oder zu beiden überführt wird.

33. Verfahren zum Umwälzen von Farbstoff, das aufweist:
Bereitstellen eines Farbnäpfchens (8) benachbart einen Klischee, wobei das Näpfchen einen inneren Dachabschnitt aufweist und Farbstoff (14) enthält;
Steuern der Viskosität des Farbstoffes in einem Behälter (18) für Farbstoff;
Überführen von Farbstoff aus dem Behälter für Farbstoff zu dem Näpfchen; und
Überführen von Farbstoff, der sich innerhalb des Näpfchens befindet, zu dem Behälter mit einer größeren Geschwindigkeit im Vergleich zu der Geschwindigkeit, mit der Farbstoff aus dem Behälter für Farbstoff zu dem Näpfchen überführt wird,
**dadurch gekennzeichnet, dass** das Näpfchen eine Lüftungsöffnung (31) und einen Luftspalt unterhalb des Dachabschnittes aufweist.

34. Verfahren nach Anspruch 33, bei dem das Näpfchen mit Farbstoff befüllt bleibt.

35. Verfahren nach Anspruch 33, bei dem das Überführen von Farbstoff aus dem Behälter für Farbstoff in das Näpfchen eine Speisepumpe (1) benutzt und das Überführen von Farbstoff, der sich innerhalb des Näpfchens befindet, in den Behälter eine Rückführpumpe (2) benutzt.

36. Verfahren nach Anspruch 33, bei dem das Überführen von Farbstoff, der sich innerhalb des Näpfchens befindet, in den Behälter eine Pumpe verwendet, die in der Lage ist, in einem Modus mit kraftschlüssiger Verlagerung zu arbeiten.

37. Verfahren nach Anspruch 36, bei dem die Pumpe, die in der Lage ist, in einem Modus mit kraftschlüssiger Verlagerung zu arbeiten, eine peristaltische Pumpe, eine Pumpe vom Impellertyp, eine Zahnradpumpe, eine Pumpe mit einer Rückstromeigenschaft oder irgendeine Kombination aus diesen umfasst.

## Revendications

1. Système de tampon d'impression, comprenant :
> une coupelle à colorant (8) qui est adjacente à un cliché (19) et comprend une partie de toit intérieure ;
> un réservoir (18) comprenant un colorant (14) ;
> un conduit d'alimentation (4) en communication fluide dudit réservoir à ladite coupelle ; et
> un conduit de retour (3) en communication fluide de ladite coupelle audit réservoir
**caractérisé en ce que** ladite coupelle comprend un évent (31), et un orifice de retour (28) disposé d'environ 3 à environ 5 millimètres en dessous de la partie de toit intérieure, de sorte que, durant l'utilisation, un espace d'air en dessous de ladite partie de toit puisse être formé.

2. Système selon la revendication 1, dans lequel ledit réservoir comprend une soupape d'entrée de solvant (11), un viscosimètre immergé dans ledit colorant, et un dispositif de commande (15) pour régler ladite soupape d'entrée de solvant, ledit dispositif de commande répondant à un signal reçu à partir dudit viscosimètre.

3. Système selon la revendication 1, dans lequel ledit conduit d'alimentation comprend une pompe d'alimentation (1) pour transférer le colorant dudit conduit d'alimentation à ladite coupelle.

4. Système selon la revendication 3, dans lequel ladite pompe d'alimentation est capable de fonctionner dans un mode non volumétrique.

5. Système selon la revendication 4, dans lequel ladite pompe d'alimentation comprend une pompe péristaltique, une pompe à aubes, une pompe à engrenages, une pompe comportant une caractéristique de refoulement, ou une association quelconque de celles-ci.

6. Système selon la revendication 5, dans lequel ladite pompe d'alimentation est une pompe péristaltique.

7. Système selon la revendication 1, dans lequel ledit conduit de retour comprend une pompe de retour (2) pour transférer le colorant de ladite coupelle audit réservoir.

8. Système selon la revendication 7, dans lequel ladite pompe de retour est capable de fonctionner dans un mode non volumétrique.

9. Système selon la revendication 8, dans lequel ladite pompe de retour comprend une pompe péristaltique, une pompe à aubes, une pompe à engrenages, une pompe comportant une caractéristique de refoulement, ou une association quelconque de celles-ci.

10. Système selon la revendication 9, dans lequel ladite pompe de retour est une pompe péristaltique.

11. Système selon la revendication 1, dans lequel ledit conduit d'alimentation comprend une première tête de pompe, et ledit conduit de retour comprend une seconde tête de pompe, dans lequel lesdites première et seconde têtes de pompe sont actionnées par une pompe commune.

12. Système selon la revendication 1, dans lequel ladite coupelle comprend un orifice (27) en communication fluide avec ledit conduit d'alimentation et avec le colorant disposé sur ledit cliché.

13. Système selon la revendication 12, dans lequel ledit orifice est disposé d'environ 1 à environ 2 millimètres au-dessus dudit cliché.

14. Système selon la revendication 1, dans lequel l'orifice de retour (28) est en communication fluide avec ledit conduit de retour et, facultativement, avec le colorant disposé sur ledit cliché.

15. Système selon la revendication 14, dans lequel ladite coupelle comprend une partie terminale dudit conduit de retour disposée d'environ 3 à environ 5 millimètres en dessous de ladite partie de toit intérieure.

16. Système selon la revendication 1, dans lequel une majorité du conduit de retour possède une superficie de section transversale qui est supérieure à celle d'une majorité du conduit d'alimentation.

17. Système selon la revendication 16, dans lequel une majorité du conduit de retour possède une superficie de section transversale qui est au moins environ deux fois plus importante que celle d'une majorité du conduit d'alimentation.

18. Système selon la revendication 2, dans lequel ledit viscosimètre comprend une broche (13) entraînée par un moteur (12), et ledit signal étant dérivé du courant électrique qui entraîne ledit moteur.

19. Coupelle à colorant comprenant un bord d'étanchéité, une partie de toit intérieure un orifice d'alimentation (27), et un orifice de retour (28), **caractérisé en ce que** ladite coupelle comprend un évent (31), et l'orifice d'alimentation (27) est disposé d'environ 1 à environ 2 millimètres au-dessus dudit bord d'étanchéité et l'orifice de retour (28) est disposé d'environ 3 à environ 5 millimètres en dessous de ladite partie de toit intérieure, de sorte que durant l'utilisation un espace d'air en dessous de ladite partie de toit puisse être formé.

20. Méthode de transfert de colorant comprenant les étapes consistant à :
> fournir un système comprenant :
> une coupelle à colorant (8) qui est adjacente à un cliché (19) et comprend une partie de toit intérieure ;
> un réservoir (18) comprenant un colorant (14) ;
> un conduit d'alimentation (4) en communication fluide dudit réservoir à ladite coupelle ; et
> un conduit de retour (3) en communication fluide de ladite coupelle audit réservoir ; et
> transférer le colorant dudit réservoir à ladite coupelle,
**caractérisée en ce que** ladite coupelle comprend un évent (31), et un espace d'air est formé en dessous de ladite partie de toit.

21. Méthode selon la revendication 20, comprenant en outre l'étape consistant à transférer le colorant de ladite coupelle audit réservoir.

22. Méthode selon la revendication 20, dans laquelle ladite viscosité dudit colorant est contrôlée en surveillant la viscosité dudit colorant et en ajoutant un solvant (29) audit colorant lorsque ladite viscosité est au-dessus d'une valeur de consigne de viscosité.

23. Méthode selon la revendication 22, dans laquelle ladite viscosité est surveillée en tant que couple nécessaire pour faire tourner une broche (13) immergée dans ledit colorant.

24. Méthode selon la revendication 20, dans laquelle le colorant et l'air résidant à l'intérieur de ladite coupelle sont transférés audit réservoir à une vitesse plus élevée par rapport à la vitesse à laquelle le colorant est transféré dudit réservoir de colorant à ladite coupelle.

25. Méthode selon la revendication 24, dans laquelle le colorant et l'air résidant à l'intérieur de la coupelle sont transférés audit réservoir à au moins environ à deux fois la vitesse à laquelle le colorant est transféré dudit réservoir de colorant à ladite coupelle.

26. Méthode selon la revendication 20, dans laquelle le colorant et l'air sont transférés en alternance de ladite coupelle audit réservoir.

27. Méthode selon la revendication 20, dans laquelle l'air entre dans ladite coupelle à travers ledit évent.

28. Méthode selon la revendication 20, dans laquelle le colorant résidant à l'intérieur de ladite coupelle est maintenu à un niveau essentiellement constant.

29. Méthode selon la revendication 28, dans laquelle ledit niveau essentiellement constant est déterminé par la position au-dessus dudit cliché d'une partie terminale dudit conduit de retour.

30. Méthode selon la revendication 29, dans laquelle ladite partie terminale dudit conduit de retour est disposée d'environ 3 à environ 5 millimètres en dessous de ladite partie de toit intérieure.

31. Méthode selon la revendication 20, dans laquelle le système comprend un tampon d'impression (7) qui est positionné de façon adjacente à ladite coupelle et le colorant est transféré dans une première partie de ladite coupelle et hors d'une seconde partie de ladite coupelle, ladite première partie étant positionnée plus près dudit tampon d'impression que ladite seconde partie.

32. Méthode selon la revendication 20, dans laquelle ledit colorant est transféré de façon péristaltique à ladite coupelle, ou audit réservoir, ou aux deux.

33. Méthode de circulation de colorant, comprenant les étapes consistant à :
> fournir une coupelle à colorant (8) adjacente à un cliché, ladite coupelle comprenant une partie de toit intérieure et contenant un colorant (14) ;
> contrôler la viscosité dudit colorant dans un réservoir de colorant (18) ;
> transférer le colorant dudit réservoir de colorant à ladite coupelle ; et
> transférer le colorant résidant à l'intérieur de ladite coupelle audit réservoir à une vitesse plus rapide par rapport à la vitesse à laquelle le colorant dudit réservoir de colorant est transféré à ladite coupelle,
**caractérisée en ce que** ladite coupelle comprend un évent (31), et un espace d'air en dessous de ladite partie de toit.

34. Méthode selon la revendication 33, dans laquelle ladite coupelle reste remplie avec le colorant.

35. Méthode selon la revendication 33, dans laquelle ladite étape consistant à transférer le colorant dudit réservoir de colorant à ladite coupelle utilise une pompe d'alimentation (1) et ladite étape consistant à transférer le colorant résidant à l'intérieur de ladite coupelle audit réservoir utilise une pompe de retour (2).

36. Méthode selon la revendication 33, dans laquelle ladite étape consistant à transférer le colorant résidant à l'intérieur de ladite coupelle audit réservoir utilise une pompe capable de fonctionner dans un mode non volumétrique.

37. Méthode selon la revendication 36, dans laquelle ladite pompe capable de fonctionner dans un mode non volumétrique comprend une pompe péristaltique, une pompe à aubes, une pompe à engrenages, une pompe comportant une caractéristique de refoulement, ou une association quelconque de celles-ci.
